# EUROPÄISCHE PATENTANMELDUNG

(11) **EP 1 580 561 A1**
(43) Veröffentlichungstag der Anmeldung: **28.09.2005**
(21) Anmeldenummer: 04360031.1
(22) Anmeldetag: 24.03.2004
(51) Int. Cl.: G01P 13/02, G01P 13/04

(54) **Verfahren und Vorrichtung zur fehlertoleranten Erkennung der Bewegungsrichtung**

(71) Anmelder: ALCATEL, 75008 Paris (FR)
(72) Erfinder: Gebert, Thomas, 74626 Bretzfeld (DE); Lauterberg Veit, Dr., 70736 Fellbach-Oeffingen (DE)
(74) Vertreter: Kohler Schmid Möbus

(57) **Zusammenfassung**

Bei einem Verfahren zur fehlertoleranten Bewegungsrichtungserkennung eines Gegenstands aus einem ersten und einem zweiten Signal (S1,S2) eines Impulsgebers oder einem ersten Signal eines ersten Impulsgebers und einem zweiten Signal eines zweiten Impulsgebers, wobei das erste und zweite Signal (S1,S2) einen Phasenversatz (Φ) zueinander aufweisen und der Signalpegel des zweiten Signals (S2) erfasst wird, wenn sich der Signalpegel des ersten Signals (S1) ändert, wird zusätzlich der Signalpegel des ersten Signals (S1) erfasst, wenn sich der Signalpegel des zweiten Signals (S2) ändert, werden die erfassten Signalpegel auf Plausibilität überprüft und wird nur bei plausiblen Signalpegeln ein Bewegungsrichtungssignal (FR) aktualisiert. Dadurch wird ein fehlerfreies Bewegungsrichtungssignal (FR) erhalten.

Die Vorrichtung weist zwei separate Einrichtungen zur Richtungserkennung deren Ausgangssignale in einer Auswerteeinrichtung mit Hilfe einer XOR-Verknüpfung und eines D-Flip-Flop zu einem einzelnen Ausgangssignal verarbeitet werden.

## Beschreibung

### Stand der Technik

Die Erfindung betrifft ein Verfahren zur fehlertoleranten Bewegungsrichtungserkennung eines Gegenstands, insbesondere eines Fahrzeugs, aus einem ersten und einem zweiten Signal eines Impulsgebers oder einem ersten Signal eines ersten Impulsgebers und einem zweiten Signal eines zweiten Impulsgebers, wobei das erste und zweite Signal einen Phasenversatz zueinander aufweisen und der Signalpegel des zweiten Signals erfasst wird, wenn sich der Signalpegel des ersten Signals ändert.

Insbesondere bei Fahrzeugen kann die Raddrehzahl erfasst werden. Daraus können alle fahrtabhängigen Informationen gewonnen werden. Insbesondere bei schienengebundenen Fahrzeugen ist es vorteilhaft, die Raddrehzahl zu erfassen und daraus beispielsweise die Geschwindigkeit und die Fahrtrichtung des Fahrzeugs abzuleiten. Dies geschieht, indem an einer Achse ein (Weg-)Impulsgeber angeordnet wird, durch den die Raddrehung beobachtet wird. Dabei kann vorgesehen sein, dass der Impulsgeber mindestens zwei phasenverschobene Ausgangssignale liefert, die definierte High/Low-Pegel aufweisen und die eine Phasendifferenz zueinander haben. Die Drehrichtungserkennung und damit die Fahrtrichtungserkennung kann aus der Auswertung der Phasendifferenz erfolgen.

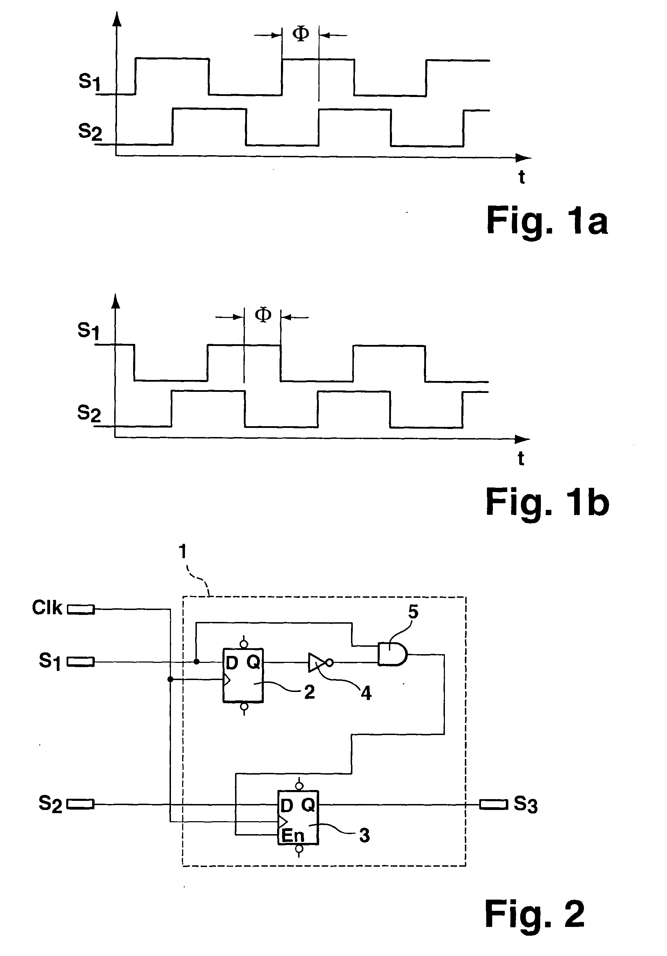

In der **Fig. 1a** sind die Signale S1, S2 eines Impulsgebers, der zwei Signale ausgibt, für eine konstante Geschwindigkeit dargestellt. Der Impulsgeber kann zwei Sensorsysteme aufweisen, die jeweils ein Signal S1, S2 ausgeben. In der Fig. 1a ist eine erste Fahrtrichtung dargestellt. Die Signale S1, S2 weisen einen Phasenversatz φ von 90° auf. Dabei eilt das Signal S1 dem Signal S2 voraus. Die Signale S1, S2 weisen ein Tastverhältnis T = 1 auf. Dies bedeutet, dass das Verhältnis High/Low = 1 ist. In der Fig. 1a wird eine erste Fahrtrichtung dargestellt, der der binäre Wert 0 zugeordnet ist.

In der **Fig. 1b** sind die Signale S1, S2 für die entgegengesetzte Fahrtrichtung dargestellt. Wiederum weisen die Signale S1, S2 einen Phasenversatz φ von 90° zueinander auf. Allerdings ist das Signal S2 voreilend vor dem Signal S1. Dieser Fahrtrichtung wird der binäre Wert 1 zugeordnet. Dadurch kann die Fahrtrichtung kodiert werden.

In der **Fig. 2** ist eine aus dem Stand der Technik bekannte Richtungserkennungseinrichtung 1 dargestellt, die aus den Signalen S1, S2 die Fahrtrichtung bestimmt. Die Fahrtrichtung kann bei einem Impulsgeber mit zwei Signalen und einem Phasenversatz der Signale ermittelt werden, indem immer bei einer fallenden Flanke oder immer bei einer steigenden Flanke eines Signals der Pegel des anderen Signals ermittelt wird. Die Richtungserkennungseinrichtung 1 in der Fig. 2 weist ein erstes Flip-Flop 2 und zweites Flip-Flop 3 auf. Die Flip-Flops 2,3 sind jeweils als D-Flip-Flop ausgebildet, wobei das Flip-Flop 3 einen Enable-Eingang En aufweist. Dem Flip-Flop 2 ist das Signal S1 und dem Flip-Flop 3 das Signal S2 zugeführt. Der Ausgang des Flip-Flops 2 ist mit einem Inverter 4 verbunden, der wiederum an ein AND-Gatter angeschlossen ist. Dem AND-Gatter 5 ist weiterhin das Signal S1 zugeführt. Am Ausgang des AND-Gatters 5 liegt daher immer ein Signalpegel "High" an, wenn das Signal S1 eine steigende Flanke aufweist. Der Ausgang des AND-Gatters 5 ist mit dem Enable-Eingang En des Flip-Flops 3 verbunden. Dies bedeutet, dass immer dann, wenn eine steigende Flanke des Signals S1 auftritt, das Signal S2 eingelesen wird. Das Ausgangssignal S3 des zweiten Flip-Flops 3 stellt das Ausgangssignal der Richtungserkennungseinrichtung 1 dar und gibt die Fahrtrichtung an. Bei jeder steigenden Flanke des Signals S1 wird daher der Zustand des Signals S2 gespeichert und liegt im Folgenden am Ausgang der Richtungserkennungseinrichtung 1 an. Zu erwähnen ist, dass die D-Flip-Flops 2, 3 synchron durch das Signal Clk getaktet sind, wobei die Taktfrequenz mindestens das Doppelte der höchsten Frequenz fₘₐₓ der Signale S1, S2 betragen muss.

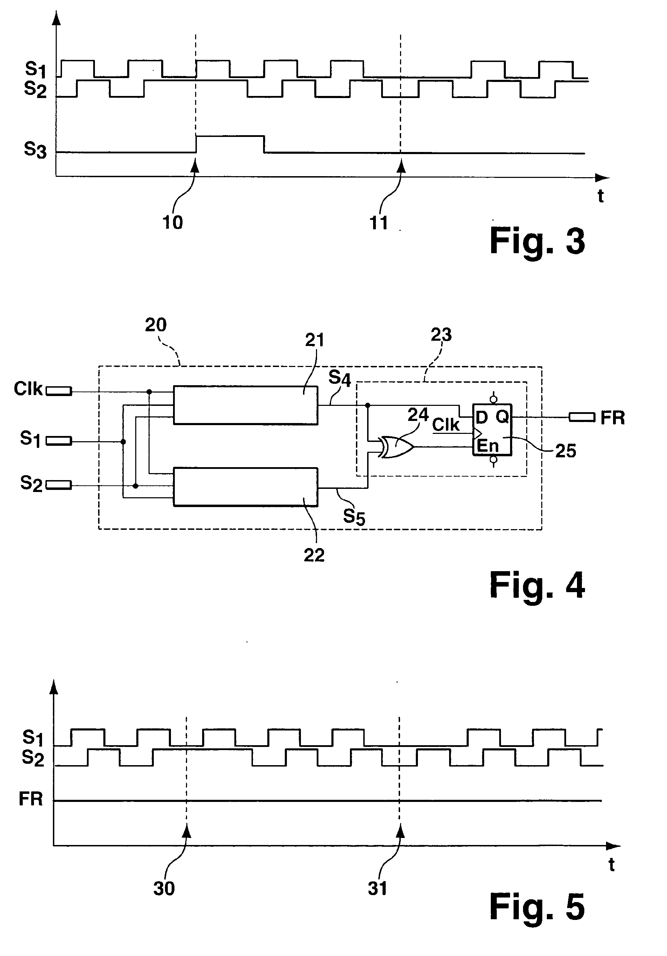

In der **Fig. 3** ist das Verhalten des Signals S3 bei einem Pulsfolgefehler dargestellt. An der Stelle 10 weist das Signal S2 bei einer steigenden Flanke von S1 einen Signalpegel "High" auf, obwohl sich die Fahrtrichtung nicht geändert hat. Demnach wird am Signal S3 ebenfalls der Signalpegel zum Wert "High" geändert. Dies bedeutet jedoch eine Fahrtrichtungsänderung. Das Signal S3 verhält sich daher fehlerhaft. Bei der Auswertung der Fahrtrichtung mit einer Software müssen diese kurzzeitigen falschen Änderungen des Signals S3 abgefangen werden, um zu verhindern, dass die Software einen Fehler meldet oder komplett ausfällt.

### Aufgabe der Erfindung

Aufgabe der Erfindung ist es, ein Verfahren und eine Vorrichtung für eine fehlertolerante Fahrtrichtungserkennung zu schaffen.

### Gegenstand der Erfindung

Gelöst wird diese Aufgabe erfindungsgemäß durch ein Verfahren der eingangs genannten Art, bei dem zusätzlich der Signalpegel des ersten Signals erfasst wird, wenn sich der Signalpegel des zweiten Signals ändert, die erfassten Signalpegel auf Plausibilität überprüft werden und nur bei plausiblen Signalpegeln ein Bewegungsrichtungssignal aktualisiert wird. Durch die Plausibilitätsprüfung kann festgestellt werden, ob ein Pulsfolgefehler vorliegt. Nur wenn kein Pulsfolgefehler vorliegt, kann auch eine Fahrtrichtungsänderung ausgegeben werden. Mit einem derartigen Verfahren können kurzzeitige Änderungen abgefangen werden, so dass Fahrtrichtungsänderungen durch beispielsweise eine Zugkontrollsoftware einfacher gehandhabt werden können. Komplexe Fehlerreaktionen der Software können auf diese Art und Weise vermieden werden. Weiterhin kann die Software für Geschwindigkeits- und Entfernungsmessungen vereinfacht werden.

Das erfindungsgemäße Verfahren kann in einer Software, die das Bewegungsrichtungssignal ausgibt, oder in einer Hardware implementiert werden. Wenn die Erfindung in einer Hardware implementiert ist, wird die Rechnerbeanspruchung in softwarebasierten Zugkontrollsystemen vermindert. Das Aktualisieren des Bewegungsrichtungssignals kann bedeuten, dass das Bewegungsrichtungssignal geändert wird oder unverändert bleibt. Um eine Fahrtrichtungserkennung zuverlässig zu ermöglichen, beträgt der Phasenversatz der Signale vorzugsweise zwischen 0° und 180° und liegt das Tastverhältnis (High/Low) der Signale im Bereich zwischen φ/(360°φ) und (360°-Φ)/Φ.

Bei einer bevorzugten Verfahrensvariante kann vorgesehen sein, dass die Signalpegel erfasst werden, wenn das jeweils andere Signal eine steigende Flanke aufweist. Dies bedeutet, dass eine Vorrichtung, wie sie im Stand der Technik bekannt ist, verwendet werden kann, um die Signalpegel auszuwerten. Allerdings muss diese Vorrichtung auch zweimal vorhanden sein. Die aus dem Stand der Technik bekannte Vorrichtung kann entweder als Hardware oder als Software implementiert werden.

Auf besonders einfache Art und Weise lässt sich die Plausibilität überprüfen, wenn die erfassten Signalpegel des ersten und zweiten Signals mittels einer logischen Verknüpfung überprüft werden. Insbesondere können die erfassten Signalpegel des ersten und zweiten Signals miteinander verglichen werden. Ohne Pulsfolgefehler oder Fahrtrichtungswechsel besitzen die erfassten Signalpegel der Signale immer unterschiedliche Pegel. Somit kann durch einen Vergleich der Pegel der Signale die Plausibilität überprüft werden. Besonders einfach kann dies geschehen, wenn die logische Verknüpfung eine XOR-Verknüpfung ist.

Die Aufgabe wird außerdem gelöst durch eine Bewegungsrichtungsbestimmungseinrichtung mit einer ersten Richtungserkennungseinrichtung, der ein erstes und ein zweites Signal zugeführt ist, wobei die Signale phasenversetzt sind, und die Richtungserkennungseinrichtung ein erstes Ausgangssignal erzeugt. Weiterhin ist eine zweite Richtungserkennungseinrichtung vorgesehen, der das erste und zweite Signal zugeführt sind und die ein zweites Ausgangssignal erzeugt. Eine Auswerteeinrichtung ist vorgesehen, die aus dem ersten und zweiten Ausgangssignal ein Bewegungsrichtungssignal ermittelt. Als Richtungserkennungseinrichtung kommt dabei die aus dem Stand der Technik bekannte Richtungserkennungseinrichtung in Frage. Durch die insbesondere logische Verknüpfung der Ausgangssignale zweier solcher Richtungserkennungseinrichtungen kann eine Plausibilitätsüberprüfung stattfinden. Daraus kann ermittelt werden, ob ein Pulsfolgefehler vorliegt oder nicht bzw. kann das Bewegungsrichtungssignal, das die Fahrtrichtung beschreibt, nur verändert bzw. aktualisiert werden, wenn die Plausibilitätsüberprüfung erfolgreich ist. Pulsfolgefehler wirken sich daher nicht in Änderungen der ausgegebenen Fahrtrichtung aus.

Bei einer bevorzugten Ausgestaltung der Erfindung weist die Auswerteeinrichtung mindestens einen logischen Operator, dem das erste und zweite Ausgangssignal zugeführt sein können, und mindestens ein Speicherelement auf, an dessen Ausgang das Bewegungsrichtungssignal anliegt. Durch einen logischen Operator kann die Plausibilitätsüberprüfung besonders einfach durchgeführt werden.

Besonders bevorzugt ist es, wenn der logische Operator als XOR-Glied und das Speicherelement als Flip-Flop ausgebildet ist. Mit einer derartigen Ausgestaltung kann das erfindungsgemäße Verfahren besonders einfach in Hardware implementiert werden. Es ist jedoch auch möglich, den logischen Operator und das Speicherelement softwaremäßig zu realisieren.

Besonders einfach kann die Bewegungsrichtungserkennungseinrichtung implementiert werden, wenn die Richtungserkennungseinrichtungen jeweils mindestens zwei Flip-Flops aufweisen, wobei jedem Flip-Flop mindestens das erste und zweite Signal zugeführt ist, und eines der Flip-Flops einer logischen Verknüpfung vorgeschaltet ist, die das zweite Flip-Flop ansteuert. Die Flip-Flops wirken als Speicher und sorgen dafür, dass an ihren Ausgängen immer auf den Takt synchronisierte Signale mit einem definierten Signalpegel anliegen.

In den Rahmen der Erfindung fällt außerdem ein Bewegungsrichtungserkennungssystem, umfassend einen Impulsgeber, der mindestens ein erstes und ein zweites Signal erzeugt und mindestens eine Bewegungserkennungseinrichtung, der das erste und zweite Signal zugeführt sind. Mit einem derartigen System kann die Bewegungsrichtung eines Fahrzeugs zuverlässig bestimmt werden. Als Impulsgeber können zum Beispiel optische Wegimpulsgeber oder Hallgeber eingesetzt werden.

Bei einer bevorzugten Ausgestaltung kann vorgesehen sein, dass der Impulsgeber mehr als zwei Signale erzeugt und der mindestens einen Bewegungserkennungseinrichtung zumindest zwei phasenversetzte Signale des Impulsgebers zugeführt sind. Beispielsweise kann vorgesehen sein, dass der Impulsgeber vier oder sechs Sensorsysteme aufweist und dadurch entsprechend vier oder sechs Signale erzeugt. Aus jeweils einem Paar von Signalen kann die Fahrtrichtung fehlertolerant bestimmt werden, vorausgesetzt, dass die verwendeten Signale zueinander phasenversetzt sind. Dabei weist der Phasenversatz φ einen Wert zwischen 0 und 180° auf. Das Tastverhältnis der Signale (Verhältnis High/Low) liegt vorzugsweise im Bereich zwischen Φ/(360°-Φ) und (360°- Φ)/φ. Dies bedeutet, dass bei Impulsgebern mit mehr als zwei Systemen das erfindungsgemäße Verfahren auf ein oder mehrere Systempaare angewendet werden kann, wenn die Systempaare einen festen Phasenversatz zueinander aufweisen.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ein Ausführungsbeispiel ist in der schematischen Zeichnung dargestellt und wird in der nachfolgenden Beschreibung erläutert. Es zeigt:
- **Fig. 1a**: eine Darstellung von zwei Signalen S1, S2 eines Impulsgebers mit zwei Signalen mit identischer Impulszahl pro Umdrehung für eine erste Fahrtrichtung;
- **Fig. 1b**: eine Darstellung von Signalen S1, S2 für eine entgegengesetzte Fahrtrichtung;
- **Fig. 2**: einen Schaltplan einer Richtungserkennungseinrichtung;
- **Fig. 3**: einen Signalverlauf zur Darstellung von Pulsfolgefehlern;
- **Fig. 4**: eine Bewegungsrichtungsbestimmungseinrichtung;
- **Fig. 5**: eine Signalfolge für Signale der Bewegungsrichtungsbestimmungseinrichtung der Fig. 4.

In der **Fig. 4** ist eine Bewegungsrichtungsbestimmungsseinrichtung 20 dargestellt. Der Bewegungsrichtungsbestimmungseinrichtung 20 sind die Signale S1, S2 eines Impulsgebers sowie ein Taktsignal Clk zugeführt. Als Ausgangssignal liefert die Bewegungsrichtungsbestimmungseinrichtung 20 ein die Fahrtrichtung beschreibendes Signal FR. Die Bewegungsrichtungsbestimmungseinrichtung 20 weist zwei Richtungserkennungseinrichtungen 21, 22 auf, die im Ausführungsbeispiel so ausgeführt sind, wie die Richtungserkennungseinrichtung 1 der Fig. 3. Die Richtungserkennungseinrichtung 21 wertet bei steigender Flanke von Signal S1 den Pegel von Signal S2 aus und gibt diesen am Ausgang als Signal S4 aus, d.h. der Pegel von Signal S2 wird erfasst. Die Richtungserkennungseinrichtung 22 wertet bei steigender Flanke von Signal S2 den Pegel von Signal S1 aus und gibt diesen am Ausgang als Signal S5 aus. Die Ausgangssignale S4, S5 von beiden Richtungserkennungseinrichtungen 21, 22 werden einer Auswerteeinrichtung 23 zugeführt. Die Auswerteeinrichtung 23 führt eine Plausibilitätsprüfung der Signale S4, S5 durch. Dazu werden die Signale S4, S5 auf eine als XOR-Glied ausgebildete Logik 24 gegeben. Die Logik 24 ist mit einem Enable-Eingang En eines D-Flip-Flops 25 verbunden. Ohne Pulsfolgefehler oder Fahrtrichtungswechsel besitzen die Signale S4, S5 immer zwei unterschiedliche Pegel, z.B. 0 und 1 oder 1 und 0. Die nachgeschaltete Logik 24 schaltet das D-Flip-Flop 25 frei, so dass der Pegel für die Fahrtrichtung von einem der beiden Signale S4, S5 im D-Flip-Flop 25 gespeichert wird. Im Ausführungsbeispiel bedeutet dies, dass der Pegel für die Fahrtrichtung des Signals S4 im D-Flip-Flop 25 abgespeichert werden kann. Dadurch wird das Bewegungsrichtungssignal FR, das die Fahrtrichtung angibt, aktualisiert.

Liegen an der Logik 24 identische Signalpegel für die Signale S4, S5 an, so sind die Signale S4, S5 unplausibel und wird das D-Flip-Flop 25 nicht freigeschaltet. Eine Änderung bzw. Aktualisierung des Signals FR erfolgt daher nicht. Welches der beiden Signale S4, S5 auf den D-Eingang des D-Flip-Flops gegeben wird, hängt von der gewünschten Polarität der Fahrtrichtung für Vorwärts- bzw. Rückwärtsfahrt, insbesondere ob die Vorwärtsfahrt mit 0 oder 1 kodiert sein soll, ab. Die Taktfrequenz Clk liegt im Ausführungsbeispiel bei 40 MHz und ist damit deutlich höher als die Taktfrequenz der Signale S1, S2.

In der **Fig. 5** ist der Signalverlauf der Signale S1, S2 und FR dargestellt. Obwohl an der Position 30 ein Pulsfolgefehler in der Pulsfolge des Signals S2 aufgetreten ist und an der Stelle 31 ein Pulsfolgefehler im Signal S1 aufgetreten ist, bleibt das Signal FR unverändert. Dies bedeutet, dass im Gegensatz zur Fahrtrichtungserkennung des Standes der Technik sich Pulsfolgefehler nicht in Änderungen der ausgegebenen Fahrtrichtung FR auswirken.

## Patentansprüche

1. Verfahren zur fehlertoleranten Bewegungsrichtungserkennung eines Gegenstands aus einem ersten und einem zweiten Signal (S1, S2) eines Impulsgebers oder einem ersten Signal eines ersten Impulsgebers und einem zweiten Signal eines zweiten Impulsgebers, wobei das erste und zweite Signal (S1, S2) einen Phasenversatz (φ) zueinander aufweisen und der Signalpegel des zweiten Signals (S2) erfasst wird, wenn sich der Signalpegel des ersten Signals (S1) ändert, **dadurch gekennzeichnet, dass** zusätzlich der Signalpegel des ersten Signals (S1) erfasst wird, wenn sich der Signalpegel des zweiten Signals (S2) ändert, die erfassten Signalpegel auf Plausibilität überprüft werden und nur bei plausiblen Signalpegeln ein Bewegungsrichtungssignal (FR) aktualisiert wird.

2. Verfahren nach Anspruch 1, **dadurch gekennzeichnet, dass** die Signalpegel erfasst werden, wenn das jeweils andere Signal (S1, S2) eine steigende Flanke aufweist.

3. Verfahren nach Anspruch 1, **dadurch gekennzeichnet, dass** die Signalpegel des ersten und zweiten Signals (S1, S2) mittels einer logischen Verknüpfung auf Plausibilität überprüft werden.

4. Verfahren nach Anspruch 3, **dadurch gekennzeichnet, dass** die logische Verknüpfung eine XOR-Verknüpfung ist.

5. Bewegungsrichtungsbestimmungseinrichtung (20) mit einer ersten Richtungserkennungseinrichtung (21), der ein erstes und ein zweites Signal (S1, S2) zugeführt ist, wobei die Signale (S1, S2) phasenversetzt sind, und die ein erstes Ausgangssignal (S4) erzeugt, **dadurch gekennzeichnet, dass** eine zweite Richtungserkennungseinrichtung (22) vorgesehen ist, der das erste und zweite Signal (S1, S2) zugeführt sind und die ein zweites Ausgangssignal (S5) erzeugt, und dass eine Auswerteeinrichtung (23) vorgesehen ist, die aus dem ersten und zweiten Ausgangssignal (S4, S5) ein Bewegungsrichtungssignal (FR) ermittelt.

6. Bewegungsrichtungserkennungseinrichtung nach einem der vorhergehenden Ansprüche, **dadurch gekennzeichnet, dass** die Auswerteeinrichtung (23) mindestens einen logischen Operator (24) und mindestens ein Speicherelement (25) aufweist, an dessen Ausgang das Bewegungsrichtungssignal (FR) anliegt.

7. Bewegungsrichtungserkennungseinrichtung nach Anspruch 6, **dadurch gekennzeichnet, dass** der logische Operator (24) als XOR-Glied und das Speicherelement (25) als Flip-Flop ausgebildet ist.

8. Bewegungsrichtungserkennungseinrichtung nach Anspruch 5, **dadurch gekennzeichnet, dass** die Richtungserkennungseinrichtungen (21, 22) jeweils mindestens zwei Flip-Flops (2, 3) aufweisen, wobei jedem Flip-Flop (2, 3) mindestens das erste oder zweite Signal (S1, S2) zugeführt ist, und eines der Flip-Flops (2, 3) einer logischen Verknüpfung (5) vorgeschaltet ist, die das zweite Flip-Flop (2, 3) ansteuert.

9. Bewegungsrichtungserkennungssystem umfassend einen Impulsgeber, der mindestens ein erstes und ein zweites Signal (S1, S2) erzeugt, und mindestens eine Bewegungserkennungseinrichtung (20) nach Anspruch 5, der das erste und zweite Signal (S1, S2) zugeführt sind.

10. Bewegungserkennungssystem nach Anspruch 9, **dadurch gekennzeichnet, dass** der Impulsgeber mehr als zwei Signale erzeugt und der mindestens einen Bewegungserkennungseinrichtung (20) zumindest zwei phasenversetzte Signale (S1, S2) des Impulsgebers zugeführt sind.
